# EUROPÄISCHE PATENTSCHRIFT

(11) **EP 3 137 344 B1**
(45) Veröffentlichungstag und Bekanntmachung des Hinweises auf die Patenterteilung: **28.03.2018**
(21) Anmeldenummer: 15720925.5
(22) Anmeldetag: 23.04.2015
(51) Int. Cl.: B60R 16/03

(54) **STABILISIERUNGSSCHALTUNG FÜR EIN BORDNETZ**
STABILIZATION CIRCUIT FOR A VEHICLE ELECTRICAL SYSTEM
CIRCUIT STABILISATEUR POUR RÉSEAU EMBARQUÉ

(30) Priorität: 30.04.2014 DE 102014208257
(43) Veröffentlichungstag der Anmeldung: 08.03.2017
(73) Patentinhaber: Continental Automotive GmbH, 30165 Hannover (DE)
(72) Erfinder: REICHOW, Dirk, 93173 Wenzenbach (DE)
(86) Internationale Anmeldenummer: PCT/EP2015/058808
(87) Internationale Veröffentlichungsnummer: WO 2015/165797

(56) Entgegenhaltungen:
- WO-A1-2011/121053
- WO-A1-2013/075975
- WO-A1-2014/033385
- JP-A- 2007 237 856

## Beschreibung

Es ist bekannt, dass elektrische Verbraucher in Kraftfahrzeugen mittels eines Bordnetzes mit Strom versorgt werden. In diesen Bordnetzen werden Spannungsquellen verwendet, die einen endlichen Innenleitwert haben, so dass bei starker Belastung, d.h. bei hohen Versorgungsströmen, die Spannung des Bordnetzes sinkt. Dies wird als Spannungseinbruch bezeichnet, wobei dieser insbesondere bei Startvorgängen von Verbrennungsmotoren des Fahrzeugs auftritt, oder auch bei der Aktivierung anderer Verbraucher, die einen hohen Strom anfordern.

Dieser Spannungseinbruch kann bei zahlreichen Verbrauchern zu einer Funktionsstörung oder -minderung führen, die insbesondere über die Zeitdauer des Spannungseinbruchs fortdauern kann.

Bei zahlreichen Anwendungen ist es nicht ausreichend und auch hinsichtlich der Kosten nachteilig, wenn die Spannungsquelle, üblicherweise eine Batterie, entsprechend groß dimensioniert wird. Es ist daher eine Aufgabe der Erfindung, eine Möglichkeit aufzuzeigen, mit der sich Spannungseinbrüche bei Verbrauchern zumindest vermindern lassen.

### Offenbarung der Erfindung

Diese Aufgabe wird erfüllt durch die Merkmale des Anspruchs 1. Weitere Ausgestaltungen ergeben sich mit den Merkmalen und Gegenständen der abhängigen Ansprüche sowie mit den Merkmalen und Gegenständen der Beschreibung.

Die hier beschriebene Stabilisierungsschaltung umfasst neben einem Anschluss für einen ersten (primären) Energiespeicher, etwa einer Bleibatterie oder einer Lithiumbatterie, einen zweiten Energiespeicher und einen dritten Energiespeicher. Der zweite Energiespeicher kann über ein Reihenauftrennungsschaltelement von der Stabilisierungsschaltung in Reihe mit dem ersten Energiespeicher geschaltet werden, um die resultierende addierte Spannung (des ersten und des zweiten Energiespeichers) für einen Verbraucher zur Verfügung zu stellen, der einen hohen Strom anfordert (etwa ein Starter). Der dritte Energiespeicher dient, zusammen mit einem ersten Wandler der Stabilisierungsschaltung, als eine weitere (temporäre) Energiequelle, deren abgegeben Leistung zu der Leistung oder den Leistungen der anderen Energiequellen bei Bedarf hinzugefügt werden kann. Darüber hinaus ermöglicht der dritte Energiespeicher die kurzfristige Aufnahme von Energie, insbesondere in Form von Rekuperationsleistung. Als Rekuperationsleistung wird elektrische Leistung bezeichnet, die durch Wandeln von kinetischer Energie des Fahrzeugs mittels eines Generators erzeugt wird. Hierbei wird der dritte Energiespeicher mit einer vorzugsweise höheren (Gesamt-)Nennspannung betrieben als der erste, so dass elektrische Leistung bei hohen Spannungen, die bei Rekuperationsbetrieb auftreten, ohne weiteres aufgenommen werden können, um dadurch die Spannung an dem zweiten und/oder dritten Energiespeicher zu erhöhen. Ferner kann die Nennspannung des dritten Energiespeichers kleiner als die Nennspannung des ersten Energiespeichers sein oder dieser entsprechen. Der dritte Energiespeicher arbeitet bei einer höheren Nennspannung und kann daher auch bei geringer Kapazität eine große Energiemenge speichern. Der dritte Energiespeicher ist über einen ersten Wandler an die restliche Stabilisierungsschaltung angeschlossen, so dass stark variierende Spannungen (aufgrund variierendem Ladezustand) des dritten Energiespeichers vom Wandler angepasst werden können.

Als Wandler wird hierbei eine Komponente bezeichnet, die eine elektrische Leistung eines Spannungs- oder Strompegels in einen anderen Spannungs- oder Strompegel wandelt. Vorzugsweise werden als Wandler Spannungswandler verwendet, insbesondere Synchronwandler, wobei auch Aufwärtswandler, Abwärtswandler, oder eine Kombination hiervon verwendet werden kann. Insbesondere werden als Wandler bidirektionale Wandler verwendet. Bidirektionale Wandler weisen (mindestens) einen ersten und einen zweiten Anschlüsse auf, zwischen denen mittels des Wandlers elektrische Leistung übertragen wird, wobei die Flussrichtung der Leistung vom ersten Anschluss zum zweiten Anschluss und umgekehrt weisen kann. Der Wandler ist ein Vierpol mit zwei Versorgungsspannungsanschlüssen, einen Primäranschluss und einem Sekundäranschluss. Der Primäranschluss oder der Sekundäranschluss kann mit einem der Versorgungsspannungsanschlüssen verbunden sein. Die Versorgungsspannungsanschlüsse sind insbesondere ein Masseanschluss und ein Versorgungspotentialanschluss. Der Wandler kann Leistung vom Primäranschluss zum Sekundäranschluss liefern und insbesondere auch in umgekehrter Richtung arbeiten.

Die Stabilisierungsschaltung ist eingerichtet, innerhalb eines Bordnetzes mit einem ersten, zweiten und dritten Bordnetzzweig angeschlossen zu sein. Es bestehen ferner Anschlüsse zu Anschluss des ersten Energiespeichers (der dem ersten Bordnetzzweig zugeordnet werden kann) und der Masse an die Stabilisierungsschaltung.

Die Stabilisierungsschaltung umfasst daher einen ersten Anschluss (A) eingerichtet zur Verbindung mit einem ersten Bordnetzzweig (E1). In diesem Bordnetzzweig befindet sich ein Starter und ein Generator oder ein Startergenerator oder allgemein eine elektrische Maschine, insbesondere ein Elektromotor, der zur Traktion des Fahrzeugs dient und/oder elektrische Energie für das Bordnetz zur Verfügung stellt. Ferner befindet sich in diesem Bordnetzzweig zumindest ein Verbraucher. Dieser kann vor Spannungseinbrüchen geschützt werden, indem bei hohen angeforderten Strömen der zweite und/oder der dritte Energiespeicher direkt oder indirekt (über einen Wandler) den ersten Energiespeicher unterstützt. Es können ferner in anderen Bordnetzzweigen Verbraucher vorgehen sein, die entweder auf diese Weise oder durch Abkoppeln von dem ersten Energiespeicher bzw. von dem ersten Bordnetzzweig vor Spannungseinbrüchen geschützt werden. Der erste Energiespeicher ist dem ersten Bordnetzzweig zugeordnet, jedoch nicht fest mit diesem verbunden. Vielmehr ist der erste Energiespeicher über das Reihenauftrennungsschaltelement mit Masse und somit auch mit dem ersten Bordnetzzweig verbunden, der das gleiche Massepotential aufweist.

Hierzu umfasst die Stabilisierungsschaltung einen zweiten Anschluss, der zur Verbindung mit einem Pol des ersten Energiespeichers (dem negativen Pol) vorgesehen ist. Das Reihenauftrennungsschaltelement innerhalb der Stabilisierungsschaltung verbindet den zweiten Anschluss schaltbar mit einem Masseanschluss der Stabilisierungsschaltung oder zumindest mit einem Masseanschluss, der zum Anschluss der Masse des ersten Bordnetzzweigs vorgesehen ist. Dadurch, dass für den ersten Energiespeicher ein eigener Eingang (d.h. Anschluss) in der Stabilisierungsschaltung vorgesehen ist, kann eine weitere Spannungsquelle (der zweite und/oder der dritte Energiespeicher, ggf. über einen Wandler) zu dem ersten Energiespeicher mittels der Stabilisierungsschaltung hinzu geschaltet werden, etwa in Reihe mit dem ersten Energiespeicher geschaltet werden. Dadurch addiert die Stabilisierungsschaltung die Spannung des ersten Energiespeichers mit dem der weiteren Stromquelle, um die summierte Spannung an dem ersten Anschluss (und Masse) zur Verfügung zu stellen.

Die Stabilisierungsschaltung weist einen dritten Anschluss auf. Dieser ist eingerichtet zur Verbindung mit einem zweiten Bordnetzzweig. Der dritte Anschluss dient zur Anbindung des zweiten Bordnetzzweigs an die Stabilisierungsschaltung, insbesondere an den zweiten bzw. dritten Energiespeicher in der Stabilisierungsschaltung. Ferner kann der dritte Anschluss zur Anbindung an den ersten Bordnetzzweig dienen, der über den zweiten Anschluss angeschlossen ist. Dadurch kann der zweite Bordnetzzweig gesteuert von dem ersten Bordnetzzweig abgekoppelt werden. Da der zweite Energiespeicher (innerhalb der Stabilisierungsschaltung) mit dem dritten Anschluss verbunden ist und somit direkt an den zweiten Bordnetzzweig angeschlossen werden kann, ist es möglich den zweiten Energiespeicher als Teil des zweiten Bordnetzes zu sehen, so dass ein Teil des zweiten Bordnetzes innerhalb und ein Teil des zweiten Bordnetzes außerhalb der Stabilisierungsschaltung vorgesehen ist. In einer alternativen Ausgestaltung weist die Stabilisierungsschaltung statt dem zweiten Energiespeicher einen Anschluss auf, der zum Verbinden mit einem zweiten Energiespeichers ausgestattet ist. Stattdessen kann der dritte Anschluss auch vorgesehen sein, mit dem zweiten Energiespeicher verbunden zu werden, der sich außerhalb der Stabilisierungsschaltung und innerhalb des damit verbindbaren zweiten Bordnetzzweigs befindet.

Die Stabilisierungsschaltung weist einen vierten Anschluss auf. Dieser ist eingerichtet zur Verbindung mit einem dritten Bordnetzzweig. Da in der Stabilisierungsschaltung der vierte Anschluss über ein steuerbares Abkopplungsschaltelement mit dem ersten Anschluss verbunden ist, kann dadurch der vierte Anschluss von dem ersten Anschluss abgekoppelt werden, etwa um den vierten Anschluss (und den daran anschließbaren dritten Bordnetzzweig) vor Spannungseinbrüchen am ersten Anschluss bzw. im ersten Bordnetzzweig zu schützen, bzw. wenn ein Generator innerhalb des dritten Bordnetzzweigs Leistung in den vierten Anschluss einspeist. Über den vierten Anschluss kann der Stabilisierungsschaltung somit Rekuperationsleistung zugeführt werden, welche etwa von einem (optionalen) Generator oder einem Starter-Generator innerhalb des dritten Bordnetzzweigs erzeugt wird. Der vierte Anschluss dient daher auch der Aufnahme von Rekuperationsleistung, insbesondere um diese an den dritten Energiespeicher oder an den zweiten und den dritten Energiespeicher zur Zwischenspeicherung zu leiten.

Die hier beschriebenen Möglichkeiten des Abkoppelns der Bordnetzzweige untereinander bzw. des ersten, dritten und vierten Anschlusses dienen ferner dazu, Spannungseinbrüche zu verringern, indem zusätzliche Lasten (am dritten und vierten Anschluss) vom ersten Anschluss und somit vom ersten Bordnetzzweig zumindest temporär (d.h. während der Belastung im ersten Bordnetzzweig bzw. des ersten Energiespeichers) abgetrennt werden. Weiterhin mit der Möglichkeit der Abkopplung, damit die Rekuperationsleistung besser gesteuert werden. Die Stabilisierungsschaltung weist zumindest einen Masseanschluss auf. Dieser ist zum Anschluss der Stabilisierungsschaltung an ein Massepotential eingerichtet. Hierbei kann der Masseanschluss eingerichtet sein, mit Masse des ersten, zweiten oder dritten Bordnetzes verbunden zu werden. Es können zwei oder mehr Masseanschlüsse vorgesehen sein, die insbesondere innerhalb der Stabilisierungsschaltung miteinander (direkt) verbunden sind. Es kann daher ein erster Masseanschluss zur Verbindung mit dem ersten Bordnetzzweig (d.h. mit dessen Massepotential) vorliegen, sowie ein zweiter Masseanschluss, der zur Verbindung mit dem zweiten oder dem dritten Bordnetzzweig oder zur gemeinsamen Verbindung mit dem zweiten und dem dritten Bordnetzzweig (d.h. mit dessen Massepotential) ausgestaltet ist. Die letztgenannte Variante ist beispielhaft in der Figur dargestellt.

Wie bereits bemerkt weist die Stabilisierungsschaltung einen zweiten Energiespeicher und einem dritten Energiespeicher auf. Zumindest einer dieser beiden Energiespeicher kann auch ausgegliedert sein, so dass die Stabilisierungsschaltung einen Energiespeicheranschluss aufweist, der zum Anschluss an den der zweite Energiespeicher oder dritten Energiespeicher vorgesehen ist, wobei auch zwei Energiespeicheranschlüsse vorgesehen sein können, um den zweiten und den dritten Energiespeicher an die Stabilisierungsschaltung anschließen zu können. Der zweite bzw. der dritte Energiespeicher können hierbei zwischen dem dritten Anschluss und dem betreffenden Energiespeicheranschluss angeschlossen werden.

Die Stabilisierungsschaltung verfügt ferner über ein Reihenauftrennungsschaltelement zwischen dem zweiten Anschluss und dem Masseanschluss. Dies ermöglicht die Auftrennung zwischen dem zweiten Anschluss, insbesondere dem Minuspol des daran angeschlossenen ersten Energiespeichers, und Masse, um den zweiten Anschluss durch serielles Einfügen auf ein höheres Potential (gegenüber Masse) zu heben. Dadurch kann bei hoher Strombelastung die Gesamtspannung (zwischen Pluspol der Batterie bzw. dem ersten Anschluss) und Masse erhöht werden.

Die Stabilisierungsschaltung weist ein Abkopplungsschaltelement auf, welches des ersten Anschluss mit dem vierten Anschluss (schaltbar) verbindet. Das Abkopplungsschaltelement dient etwa zur Abkopplung des ersten Bordnetzzweigs (insbesondere des ersten Energiespeichers bzw. der Verbraucher im ersten Bordnetzzweig, u.a. des Starters) von zumindest einem weiteren Bordnetzzweig. Ferner kann durch das Abkopplungsschaltelement der dritte Bordnetzzweig bzw. der vierte Anschluss vom ersten Anschluss abgekoppelt werden.

Ferner ist der zweite Energiespeicher zwischen dem Masseanschluss und dem dritten Anschluss angeschlossen. Dieser Energiespeicher kann zum Anheben des Potentialniveaus des ersten Energiespeichers verwendet werden und/oder kann zum Versorgen des dritten Anschlusses (bzw. der daran angeschlossenen Verbraucher) verwendet werden.

Der dritte Anschluss ist über den dritten Energiespeicher und einen ersten Wandler mit dem vierten Anschluss verbunden ist. Der zweite und der dritte Energiespeicher sind in Reihe geschaltet, insbesondere über eine dauerhafte Verbindung. Es besteht ein Verbindungspunkt zwischen dem zweiten und dem dritten Energiespeicher, insbesondere zwischen dem Pluspol des zweiten Energiespeichers mit dem Minuspol des dritten Energiespeichers. Dieser ist mit dem vierten Anschluss verbunden bzw. bildet den vierten Anschluss. In einer alternativen Ausführungsform nimmt der Verbindungspunkt die Stelle des vierten Anschlusses ein, wobei der Verbindungspunkt insbesondere keinen Anschluss (nach außen) bildet. An den Verbindungspunkt kann ferner der zweite Wandler (siehe weitere Beschreibung) angeschlossen sein, insbesondere mit einem zweiten Anschluss des Wandlers, wobei ein erster Anschluss des zweiten Wandlers mit dem ersten Wandler (oder auch mit dem vierten Anschluss) verbunden sein kann. An diesen Verbindungspunkt kann zudem ein Unterstützungsschaltelement angeschlossen sein, das den Verbindungspunkt mit dem zweiten Anschluss bzw. mit dem Reihenauftrennungsschaltelement verbindet.

In einer Ausführungsform kann die Stabilisierungsschaltung ein Unterstützungsschaltelement aufweisen, etwa wie vorangehend genannt. Dieses verbindet schaltbar den zweiten Anschluss mit dem dritten Anschluss. Insbesondere verbindet das Unterstützungsschaltelement den zweiten Anschluss, der zum Anschluss an den ersten Energiespeicher ausgestaltet ist, schaltbar mit dem zweiten und/oder mit dem dritten Energiespeicher. Hierbei kann das Unterstützungsschaltelement den zweiten Anschluss mit einem Pluspol des zweiten Energiespeichers und/oder mit einem Minuspol des dritten Energiespeichers verbinden. Zudem kann das Unterstützungsschaltelement den zweiten Anschluss mit einem (zur Masse gerichteten) Anschluss des zweiten Wandlers verbinden. Dieser Anschluss zweiten Wandlers ist insbesondere mit einem Verbindungspunkt verbunden, über den der zweite Energiespeicher (bzw. dessen Pluspol) mit dem dritten Energiespeicher (bzw. dessen Minuspol) miteinander verbunden sind. Der (zur Masse gerichtete) Anschluss des zweiten Wandlers ist insbesondere mit dem zweite Energiespeicher (bzw. dessen Pluspol) und/oder mit dem dritten Energiespeicher (bzw. dessen Minuspol) verbunden.

Wie bereits erwähnt kann die Stabilisierungsschaltung ferner einen zweiten Wandler aufweisen. Dieser verbindet den dritten Anschluss (bzw. den Pluspol des zweiten Energiespeichers) mit dem dritten Energiespeicher, insbesondere mit dessen Pluspol. Der zweite Wandler ist somit parallel zu dem dritten Energiespeicher angeschlossen. Der zweite Wandler verbindet den dritten Anschluss (bzw. den Pluspol des zweiten Energiespeichers oder den Minuspol des dritten Energiespeichers oder deren Verknüpfungspunkt) insbesondere mit einem Pol des dritten Energiespeichers, der zum vierten Anschluss bzw. zum ersten Wandler hin weist.

Der zweite Wandler hat beispielsweise eine Nennleistung oder einen Nennstrom, der nicht mehr 30%, 20%, 10 %, 5%, 1%, 0.4% oder 0.2 % der Nennleistung oder des Nennstroms des ersten Wandlers beträgt. Der zweite Wandler ist somit für deutlich geringere Leistungen oder Ströme ausgelegt wird der erste Wandler. Vorzugsweise ist der zweite Wandler eingerichtet, den zweiten Energiespeicher zu laden und zu entladen unabhängig vom ersten Energiespeicher, insbesondere mit konstantem Strom. Der erste Wandler ist ausgestaltet, den zweiten und den dritten Energiespeicher zu laden und zu entladen unabhängig vom ersten Energiespeicher, insbesondere mit konstantem Strom. Weiterhin kann der erste Wandler auch die Spannung der ersten und/oder dritten Bordnetzzweiges regeln, wenn der Generator oder die Generatoren keine oder verminderte Leistung liefern oder der Schalter SW3 geöffnet ist.

Der dritte Energiespeicher kann eine geringere Gesamtkapazität als der zweite Energiespeicher aufweisen. Hierbei ist die Gesamtkapazität die Ladung innerhalb des Energiespeichers bezogen auf die anliegende Spannung. Der dritte Energiespeicher kann beispielsweise eine Kapazität von nicht mehr als 70%, 50%, 40 %, 30 % oder 10 % der Kapazität des zweiten Energiespeichers aufweisen. Alternativ kann die Kapazität des dritten Energiespeichers der des zweiten Energiespeichers entsprechen.

Der dritte Energiespeicher kann eine höhere Nennspannung aufweisen als der zweite Energiespeicher. Dies kann insbesondere eine Nennspannung sein, die mehr als 50%, 100%, 200% oder 300% über der Nennspannung des zweiten Energiespeichers liegt. Dies kann ferner für die (maximale) Betriebsspannung gelten. Der dritte Energiespeicher kann ferner eine Nennspannung haben, die an die Spannung (der Rekuperationsleistung) am dritten Anschluss angepasst ist. Hingegen der zweite Energiespeicher kann eine Nennspannung aufweisen, die der Unterstützung des ersten Energiespeichers beim Verbinden des ersten mit dem zweiten Energiespeicher gerecht wird. Somit kann die Nennspannung des dritten Energiespeichers beispielsweise 3 V, 5 V, 12 V, 24 V, oder 48 V betragen. Die Nennspannung des zweiten Energiespeichers kann beispielsweise 2.5 V, 5 V oder 7.5 V betragen. Die Nennspannung des ersten Energiespeichers kann beispielsweise 12 V bis 14V betragen.

Der dritte Energiespeicher weist insbesondere eine Serienschaltung von Speicherelementen auf. Dies kann eine Serienschaltung von Kondensatoren, insbesondere Superkondensatoren, Doppelschichtkondensatoren oder Elektrolytkondensatoren sein. Ferner kann dies eine Serienschaltung von galvanischen Zellen sein, insbesondere von Lithium-basierten (oder auch Nickel-basierten) galvanischen Zellen. Der ersten Energiespeicher kann eine Reihenschaltung von galvanischen Zellen umfassen, insbesondere eine Reihenschaltung von Blei-basierten galvanischen Zellen (im Sinne einer Bleibatterie) oder eine Reihenschaltung von Lithium-basierten Zellen. Als Lithium-basierten Zellen werden insbesondere Zellen eines Lithium-Ionen-Akkumulators bezeichnet. Als Blei-basierten galvanischen Zellen insbesondere Zellen eines Bleiakkumulators bezeichnet. Der erste, zweite und/oder der dritte Energiespeicher kann elektrochemische oder elektrostatische Speicherelemente aufweisen. Alternativ weist der dritte Energiespeicher nur ein Speicherelement auf.

Der zweite Energiespeicher kann ein einzelnes Speicherelement oder eine Reihenschaltung von Speicherelementen aufweisen, das bzw. die zwischen dem Masseanschluss einerseits und dem dritten Anschluss (bzw. dem Unterstützungsschaltelement oder dem dritten Energiespeicher) andererseits angeschlossen ist. In spezifischen Ausgestaltungen kann der zweite Energiespeicher eine Reihenschaltung von Speicherelementen aufweisen. Das Speicherelement des zweiten Energiespeichers als ein Kondensator, insbesondere als Superkondensator, Doppelschichtkondensator oder Elektrolytkondensator ausgeführt, oder ist als galvanische Zelle ausgestaltet, insbesondere als Lithium-basierte galvanische Zelle.

Der dritte Energiespeicher kann beispielsweise eine Reihenschaltung von 1 - 20 Speicherelementen aufweisen. Der zweite Energiespeicher kann beispielsweise eine Reihenschaltung von 1 - 3 Speicherelementen aufweisen. Ein Speicherelement entspricht hierbei einem Kondensator (Supercap-Kondensator oder Double-layer-Kondensator). Der dritte Energiespeicher kann beispielsweise eine Nominalspannung von 4 - 16 Volt aufweisen oder auch von 12 - 48 Volt, entsprechend einer Reihenschaltung von Speicherelementen mit einer jeweiligen Nominalspannung von ca. 1.5 - 5 Volt. Der zweite Energiespeicher kann eine Nominalspannung von 1.5 - 5 Volt aufweisen, etwa wenn nur ein Speicherelement in Form eines Kondensators vorliegt.

Die Speicherelemente können jeweils einen einzelnen Kondensator aufweisen oder eine Parallelschaltung von mehreren Kondensatoren. Ferner kann der zweite und/oder der dritte Energiespeicher mehrere Reihenschaltungen von parallel geschalteten Kondensatoren aufweisen. Die Speicherelemente können elektrochemische oder elektrostatische Speicher sein. Insbesondere der zweite Energiespeicher kann eine Parallelschaltung von mindestens zwei Kondensatoren aufweisen.

Die Schaltelemente können als Leistungshalbleiterschalter, insbesondere als MOSFET (bspw. n-MOSFET) oder IGBT, oder als elektromechanische Schalter, insbesondere als Relais oder Schütz ausgestaltet sein. Das Abkopplungsschaltelement kann insbesondere als elektromechanischer Schalter ausgeführt sein, etwa als Relais. Die Schaltelemente oder zumindest eines der Schaltelemente kann als Reihenschaltung zweiter antiseriell geschalteter Leistungshalbleiterschalter ausgebildet sein, insbesondere wenn diese eine Substratdiode (Inversdiode oder Body-Diode) aufweisen. Falls ein Schaltelement zwei Leistungshalbleiterschalter aufweist, so sind diese derart seriell verbunden, dass die Durchlassrichtungen der Substratdioden zueinander entgegengesetzt sind. Das Unterstützungsschaltelement und/oder das Reihenauftrennungsschaltelement sind vorzugsweise mit Leistungshalbleitern als Schalterelemente ausgebildet.

Die Schaltelemente können jeweils eine parallel (zu den Anschlüssen des Schaltelements) angeschlossene Diode aufweisen. Diese Dioden können als diskrete Bauteile oder als Substratdiode ausgebildet sein. Das Reihenauftrennungsschaltelement kann eine Diode aufweisen, deren Durchlassrichtung zum ersten Energiespeicher weist. Das Unterstützungsschaltelement kann eine Diode aufweisen, deren Durchlassrichtung zum zweiten und/oder zum dritten Energiespeicher weist. Die Dioden sind insbesondere Substratdioden eines n-MOSFETs, der als Schaltelement verwendet wird.

Es kann ferner eine Ansteuerschaltung vorgesehen sein, entweder innerhalb der Stabilisierungsschaltung oder außerhalb der Stabilisierungsschaltung, wobei in diesem Fall eine Steuerschnittstelle vorgesehen ist, die zum Anschluss an die Ansteuerschaltung eingerichtet ist.

Die Ansteuerschaltung (bzw. die Steuerschnittstelle) ist mit zumindest einem der Schaltelemente (SW1, SW2, SW3) und/oder zumindest einer der Wandler (CO1, CO2) ansteuernd verbunden. Insbesondere kann die Ansteuerschaltung mit allen der hier genannten Schaltelemente ansteuernd verbunden sein. Vorzugsweise ist die Ansteuerschaltung mit allen der hier genannten Wandlern bzw. Wandlern ansteuernd verbunden. Die Ansteuerschaltung kann Schaltungsgruppen umfassen, die unabhängig voneinander arbeiten. So können die Wandler von unterschiedlichen Schaltungsgruppen gesteuert werden, und insbesondere von Schaltungsgruppen, die getrennt sind von Schaltungsgruppen, die andere Komponenten (etwa die Schaltelemente) ansteuern. Zudem können zur Ansteuerung der Schaltelemente unabhängig voneinander arbeitende Schaltungsgruppen verwendet werden, insbesondere eine spezifische Schaltungsgruppe für jedes Schaltelement.

Die Ansteuerschaltung ist eingerichtet, die daran angeschlossenen Elemente (Schaltelemente bzw. Wandler) durch Abgabe von Steuersignalen in bestimmte Schaltzustände oder Betriebszustände zu versetzen. Zumindest einer der folgenden Zustände ist möglich:

Ein erster Rekuperationszustand, in dem das Reihenauftrennungsschaltelement geöffnet ist. Ferner ist in diesem Zustand und das Abkopplungsschaltelement geschlossen. Damit kann Rekuperationsleistung, die am ersten Anschluss oder am vierten Anschluss anliegt, an den dritten Energiespeicher übermittelt werden, insbesondere um diesen zu Laden. Hierbei wird die Rekuperationsleistung über den ersten Wandler geführt. Dadurch wird die Rekuperationsleistung an den zweiten und/oder dritten Energiespeicher übermittelt.

Bei geöffnetem Reihenauftrennungsschaltelement und geschlossenem Abkopplungsschaltelement wirkt die Anordnung des dritten mit zweitem Energiespeicher und erstem Wandler als kapazitive Bordnetzstütze bei positiver Regelspannungsmodulation des ersten (oder zweiten) Generators. Bei negativer Regelspannungsmodulation des ersten (oder zweiten) Generators verhindert oder minimiert die Diode des Reihenauftrennungsschaltelements in Verbindung dem erstem Energiespeicher ein Absinken der Bordnetzspannung.

Unter positiver und negativer Regelspannungsmodulation des Generators versteht man den bspw. aufmodulierten sinusförmigen Verlauf der Regelspannung auf den Bordnetzzielwert. Dabei ist der Bordnetzzielwert der Regelspannung bspw. 13V und die Regelspannungsmodulationsamplitude +/- 1V bezogen auf den Bordnetzzielwert. Die Regelspannungsmodulation wird am ersten bzw. dritten Bordnetzzweig sichtbar, wenn kein ausreichend großer erster Energiespeicher oder andere kapazitivwirkende Speicher vorhanden sind. Allgemein ist unter der Regelspannungsmodulationsamplitude ein Wechselanteil des von dem Generator abgegebenen Stroms bzw. der von diesem erzeugten Spannung zu verstehen. Der zweite und/oder dritte Energiespeicher (insbesondere die Reihenschaltung dieser Energiespeicher) dient hierbei als Glättungsglied für die Generatorleistung, welche einen Wechselstromanteil oder Wechselspannungsanteil aufweist. Ein zweiter Rekuperationszustand, in dem das Reihenauftrennungsschaltelement geschlossen ist. Ferner ist in diesem Zustand das Abkopplungsschaltelement geöffnet. In diesem Fall kann Rekuperationsleistung über den vierten Anschluss aufgenommen werden.

Ein erster Startzustand, in dem das Abkopplungsschaltelement geöffnet ist. Das Reihenauftrennungsschaltelement ist in diesem Zustand geschlossen. Es wird Leistung von dem ersten Energiespeicher an den ersten Anschluss abgegeben. Der daran anschließbare erste Bordnetzzweig wird somit ohne Beeinträchtigung der anderen Bordnetzzweige bei einem Startvorgang (im ersten Bordnetzzweig) versorgt. Der erste Wandler kann Leistung an den vierten Anschluss abgeben, um die dort angeschlossene Last zu versorgen. Alternativ kann im ersten Startzustand das Reihenauftrennungsschaltelement geöffnet sein. Das Unterstützungsschaltelement kann geschlossen sein, oder kann geöffnet sein. Der erste Wandler kann in diesem Zustand Leistung von den zweiten und/oder von dem dritten Energiespeicher an den zweiten Anschluss liefern, um den ersten Energiespeicher zu unterstützen.

Ein zweiter Startzustand, in dem das Abkopplungsschaltelement geschlossen ist. In diesem zweiten Startzustand ist das Reihenauftrennungsschaltelement offen oder, alternativ, geschlossen. In diesem Zustand wird Leistung von dem zweiten und/oder von dem dritten Energiespeicher (je nach Schaltzustand des Reihenauftrennungsschaltelements bzw. des Unterstützungsschaltelements) zur Unterstützung eines Startvorgangs an den ersten Anschluss übertragen. Falls im zweiten Startzustand das Reihenauftrennungsschaltelement offen ist, ist das Unterstützungsschaltelement geschlossen.

Ferner können die Schaltelemente einen Grundzustand aufweisen, wobei auch die Ansteuerschaltung diesen Grundzustand der Schaltelemente definieren kann. Der Grundzustand kann ein Zustand sein, der beim Einschalten oder ohne Stromversorgung oder ohne (weitere) Steuersignale auftritt. Das Reihenauftrennungsschaltelement kann im Grundzustand geschlossen sein. Das Unterstützungsschaltelement kann im Grundzustand offen sein. Das Abkopplungsschaltelement kann im Grundzustand geschlossen sein. Alternativ kann das Reihenauftrennungsschaltelement kann im Grundzustand offen sein, insbesondere um in einem Schlafmodus der Stabilisierungsschaltung nur geringfügig Strom zur Ansteuerung zu erfordern.

### Kurzbeschreibung der Zeichnung

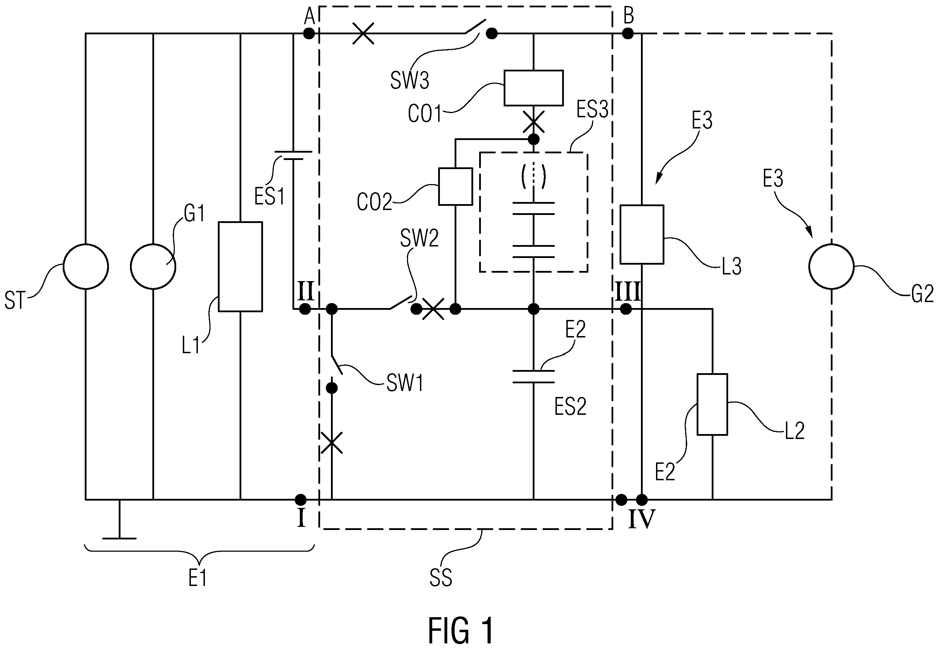

Die Figur 1 zeigt einen Übersichtsschaltplan zur näheren Erläuterung der Funktionsweise

### Detaillierte Beschreibung der Zeichnung

Der Übersichtsschaltplan der Figur 1 zeigt ein Bordnetz mit einem ersten Bordnetzzweig E1 und einem zweiten Bordnetzzweig E2 und einem dritten Bordnetzzweig E3. Der erste Bordnetzzweig E1 umfasst einen Starter ST und einen Generator G1, wobei der Starter als ein Starter für einen Verbrennungsmotor ausgestaltet ist und der Generator G1 zur Stromversorgung des Bordnetzes beiträgt und somit als Lichtmaschine ausgestaltet sein kann. Ferner sind in dem Bordnetz E1 Verbraucher in Form der Last L1 dargestellt. Eine dem ersten Bordnetzzweig zugehörige Batterie ES1, die allgemein als ein elektrischer Energiespeicher vorgesehen ist, dient zur Stromversorgung des Starters und der Last L1. Die Batterie ES1 ist nicht direkt mit dem ersten Bordnetzzweig verbunden, sondern ist über die hier beschriebene Stabilisierungsschaltung mit dem restlichen Bordnetzzweig E1 verbunden. Hierzu weist die Stabilisierungsschaltung einen ersten Anschluss A und einen zweiten Anschluss II auf, an die die Anschlüsse der Batterie angeschlossen werden können. Der erste Anschluss A entspricht dem positiven Potential des Bordnetzzweigs E1 und der zweite Anschluss II dient der Stabilisierungsschaltung als Anschluss für den Minuspol des Energiespeichers ES1. Ein Masseanschluss I entspricht der Masse des ersten Bordnetzzweigs E1, ausschließlich dem ersten Energiespeicher ES1. Der zweite Anschluss II kann das gleiche Potential wie der Masseanschluss I aufweisen. Um jedoch die Spannung im ersten Bordnetzzweig E1 ausschließlich der Batterie ES1 zu unterstützen, können die Potentiale des zweiten Anschlusses II und des Masseanschlusses I auseinanderfallen, wenn zwischen diese ein zweiter Energiespeicher in Reihe geschaltet wird.

Zudem umfasst die Stabilisierungsschaltung STS ein Reihenauftrennungsschaltelement SW1 zwischen dem zweiten Anschluss II und dem Masseanschluss I. Ist das Reihenauftrennungsschaltelement SW1 geschlossen, so entspricht das Potential des zweiten Anschlusses II dem Massepotential des Masseanschlusses I. Um die Last L1 (bzw. die betreffenden Verbraucher) und den Starter ST zu unterstützen, kann das Reihenauftrennungsschaltelement SW1 geöffnet werden, wobei der zweite Energiespeicher ES2 und/oder der dritte Energiespeicher ES3 hinzugeschaltet werden, um die Batterie ES1 über dem ersten Wandler CO1 zu unterstützen. Hierbei ist das Unterstützungsschaltelement SW2 geöffnet.

Hierzu umfasst die Stabilisierungsschaltung einen zweiten Energiespeicher ES2, der über ein Unterstützungsschaltelement SW2 zugeschaltet werden kann, indem der zweite Energiespeicher ES2 in Reihe mit dem ersten Energiespeicher (d.h. an den ersten Anschluss A und den zweiten Anschluss II) geschaltet wird.

Die Stabilisierungsschaltung STS umfasst ferner ein Abkopplungsschaltelement SW3, welches den ersten Anschluss A (d.h. das positive Potential) des ersten Bordnetzzweigs E1 mit dem zweiten Energiespeicher ES2 und mit dem dritten Energiespeicher ES3 verbindet. Hierbei ist das Abkopplungsschaltelement SW3 zwischen dem ersten Anschluss A und einem ersten Wandler CO1 angeschlossen, wobei der erste Wandler CO1 auf der dem Abkopplungsschaltelement entgegengesetzten Seite mit dem dritten Energiespeicher ES3 und über diesen unter anderem auch mit dem zweiten Energiespeicher ES2 verbunden ist. Ein zweiter Wandler CO2 verbindet den Pluspol des zweiten Energiespeichers ES2 mit dem Pluspol des dritten Energiespeichers ES3. Hierbei sind der zweite und der dritte Energiespeicher in Reihe geschaltet, wobei der sich dadurch ergebende Verknüpfungspunkt an eine Seite des zweiten Wandlers CO2 angeschlossen ist, während die entgegengesetzte Seite des zweiten Wandlers CO2 mit dem Pluspol des dritten Energiespeichers verbunden ist. Insbesondere verbindet der zweite Wandler CO2 den Verbindungspunkt, der zwischen dem dritten und zweiten Energiespeicher liegt mit dem Verbindungspunkt, über den der erste Wandler CO1 mit dem dritten Energiespeicher ES3 verbunden ist.

Die Stabilisierungsschaltung der Figur 1 weist einen dritten Anschluss III auf, der den Verbindungspunkt des zweiten und des dritten Energiespeichers ES2, ES3 entspricht. Ferner entspricht der dritte Anschluss III dem Potential des Verbindungspunkts des Unterstützungsschaltelements SW2 und des zweiten Wandlers CO2 beziehungsweise dem Verbindungspunkt zwischen dem zweiten Energiespeicher ES2 und dem zweiten Wandler CO2.

An diesem dritten Anschluss III können Verbraucher (dargestellt durch eine Last L2) angeschlossen sein.

Ein drittes Bordnetz E3 mit Verbrauchern (dargestellt durch Last L3) ist über den vierten Anschluss B mit der Stabilisierungsschaltung STS verbunden. Durch das Abkopplungsschaltelement SW3 kann die Verbindung zwischen dem ersten Anschluss A (angeschlossen an einen erstes Bordnetzzweig) und dem vierten Anschluss B (angeschlossen an den dritten Bordnetzzweig E3) gesteuert geöffnet oder geschlossen werden. Das Abkopplungsschaltelement SW3 befindet sich zwischen dem ersten Anschluss A und dem Wandler CO1. Dies ermöglicht ferner, dass über den ersten Wandler CO1 aus dem zweiten und/oder dritten Energiespeicher Leistung für den vierten Anschluss B bereitgestellt werden, d. h. für das daran angeschlossenen dritten Bordnetz. Bei offenem Abkopplungsschaltelement SW3 wird die Energie des zweiten und/oder des dritten Energiespeichers ES2, ES3 nur an den vierten Anschluss B übertragen. In diesem Fall ist der vierte Anschluss B getrennt von dem ersten Anschluss A, so dass der an dem ersten Anschluss A angeschlossene Bordnetzzweig E1 und der dritte Bordnetzzweig E3 autark voneinander arbeiten können.

An dem vierten Anschluss B kann ferner ein Generator G2 angeschlossen sein, der insbesondere einen Teil des dritten Bordnetzes E3 bildet. Der Generator G2 ist insbesondere ein Startergenerator oder elektrische Maschine. Der Generator G2 ist eingerichtet, Rekuperationsleistung zu erzeugen, um diese über den vierten Anschluss B und dem Masseanschluss I an die Stabilisierungsschaltung zu übertragen, insbesondere an den zweiten oder an den dritten Energiespeicher ES2, ES3. Hierzu kann der Masseanschluss zweiteilig sein, wobei der Masseanschluss I dem ersten Bordnetz E1 zugeordnet ist und ein zweiter Masseanschluss IV mit dem dritten Bordnetz E3 verbunden ist. Die beiden Masseanschlüsse sind miteinander verbunden, so dass diese auch als ein einziger Masseanschluss betrachtet werden kann.

Die Energiespeicher ES2, ES3 sind in der Figur 1 als in die Stabilisierungsschaltung integriert dargestellt. Alternative Ausführungsformen sehen vor, dass zumindest einer dieser Energiespeicher sich außerhalb der Stabilisierungsschaltung befindet, wobei an die Stelle der Energiespeicher jeweils zwei Anschlüsse treten, über die der Energiespeicher angeschlossen werden kann.

Die in Figur 1 dargestellten Verbindungen sind zur Leistungsübertragung ausgestattet, d. h. zur Versorgung von Verbrauchern oder zur Übertragung von Rekuperationsleistung bzw. von Rekuperationsenergie. Signalschaltungen und Signalleitungen sind in Figur 1 aus Gründen der Klarheit nicht dargestellt, wobei die Stabilisierungsschaltung der Figur 1 jedoch auch eine Ansteuerschaltung aufweisen kann, welche steuernd mit den Schaltelementen SW1, SW2 bzw. SW3 und/oder mit den Wandlern CO1, CO2 verbunden seien kann.

Die Stabilisierungsschaltung kann ferner zumindest einen Stromsensor aufweisen, wobei der zumindest einen Stromsensor auch mit der Ansteuerungsschaltung verbunden sein kann, so dass diese abhängig von den Strömen und/oder abhängigen von erfassten Potentialen die betreffenden Komponenten ansteuert. Zur Erfassung der Potentiale kann die Ansteuerschaltung auch mit den Anschlüssen A, B, I, II und/oder III verbunden sein sowie ferner auch mit dem Verknüpfungspunkt zwischen dem dritten Energiespeicher ES3 und dem ersten Wandler CO1.

Zumindest ein Stromsensor kann innerhalb der Stabilisierungsschaltung dem ersten Anschluss A vorgeschaltet sein, d. h. zwischen dem Abkopplungsschaltelement SW3 und dem ersten Anschluss A. Die betreffende Stelle ist in der Figur 1 als Kreuz (X) gekennzeichnet. Eine weitere mögliche Stelle für einen Stromsensor befindet sich zwischen dem Masseanschluss I und dem Reihenauftrennungsschaltelement SW1. Eine weitere mögliche Stelle für einen Stromsensor befindet sich unmittelbar vor oder nach dem Unterstützungsschaltelement SW2. Insbesondere kann ein derartiger Stromsensor zwischen dem Unterstützungsschaltelement SW2 und dem Verbindungspunkt zwischen dem zweiten und dem dritten Energiespeicher ES2, ES3 vorgesehen sein. Schließlich kann ein Stromsensor an dem ersten Wandler CO1 vorgesehen sein, insbesondere zwischen dem Wandler CO1 und dem vierten Anschluss beziehungsweise dem Abkopplungsschaltelement SW3, oder, wie in Figur 1 dargestellt zwischen dem ersten Wandler und dem dritten Energiespeicher ES3.

Die Anschlüsse A und B stellen unterstütze positive Potentiale A und B dar, die mittels der Stabilisierungsschaltung bei Belastung unterstützt werden können, beziehungsweise mittels der Stabilisierungsschaltung voneinander getrennt werden können, um eine gegenseitige Beeinflussung zu vermeiden. Hierbei wird der erste Einfluss A unterstützt durch eine Zuschaltung von zumindest einem weiteren Energiespeicher (ES2 oder ES2 mit ES3) zu dem ersten Energiespeicher ES1. Der vierte Anschluss B wird unterstützt von dem zweiten oder von dem dritten Energiespeicher ES2, ES3, wobei der Wandler CO1 es ermöglicht, das Potential des zweiten und/oder dritten Energiespeichers ES2, ES3 derart anzupassen, dass sich an dem Anschluss B eine vorzugsweise konstante Spannung ergibt. Dadurch können beispielsweise sensitive Verbraucher als Verbraucher des dritten Bordnetzzweigs (gekennzeichnet durch Last L3) angeschlossen werden, da es das Schaltelement SW3 ermöglicht, das Bornetzzweig E1, in dem starke Belastungen stattfinden, von dem dritten Bordnetzzweig E3 zu trennen.

Sensitive Lasten sind insbesondere Lasten, deren Funktion von einem Spannungseinbruch derart beeinträchtigt wird, dass sich für das Fahrzeug kritische Situationen ergeben können. Hierbei betreffen die Lasten L1 oder insbesondere L3 sicherheitsrelevante Verbraucher wie Motorsteuerung, Signalgeber, Sicherheitsmaßnahmen wie Airbag, usw. ESP, ABS oder andere sicherheitsrelevante Assistenzfunktionen. Insbesondere während eines Startvorgangs der von dem Starter ST ausgeführt wird, kann Abkopplungsschaltelement SW3 geöffnet werden, so dass der dritte Bordnetzzweig E3 zum einen nicht belastet wird, und zum anderen von dem zweiten Energiespeicher ES2 oder von dem zweiten Energiespeicher ES2 zusammen mit dem dritten Energiespeicher ES3 über den Wandler CO1 versorgt werden kann. Der zweite Wandler CO2 dient hierbei nicht primär zur Unterstützung der Verbraucher im dritten Bordnetzzweig beziehungsweise des Anschlusses B, sondern dient zum Balancing des zweiten Energiespeichers gegenüber dem dritten Energiespeicher ES3. Die Funktion des Aufladens durch den zweiten Wandler CO2 ist bedingt zeitkritisch, so dass die Leistung des zweiten Wandlers CO2 deutlich unter der Leistung des Wandlers CO1 liegen kann, welcher die Funktion der Spannungsstabilisierung für die Lasten L3 im dritten Bordnetzzweig E3 hat. Das Aufladen des zweiten Energiespeichers muss innerhalb der Zeit zwischen Startvorgängen oder zwischen Hochstromintervallen im ersten oder dritten Bordnetzzweig durchgeführt werden, so dass der zeitliche Abstand zwischen Startvorgängen (oder Hochstromintervallen) eine Grenze für die Zeit bildet, in der der zweite Energiespeicher ES2 aufgeladen werden muss.

Der zweite Anschluss II dient zum Anschluss des negativen Pols des ersten Energiespeichers ES1 und entspricht bei geschlossenem Reihenauftrennungsschaltelements SW1 dem Massepotential I, kann jedoch auch im Falle des unterstützenden Zuschaltens des zweiten Energiespeichers ES2 geöffnet sein und dadurch ein höheres Potential (entsprechend der Spannung des zweiten Energiespeichers ES2) aufweisen, wenn das Unterstützungsschaltelement SW2 geschlossen wird. Der dritte Anschluss III ermöglicht einen direkten Zugriff auf die Spannung des zweiten Schaltelements ES2, so dass hierbei weitere Lasten L2 angeschlossen werden können. Die Lasten L2 können Komponenten zum Batteriemanagement sein, insbesondere zum Management des zweiten Energiespeichers, beispielsweise Sensoren, Messschaltungen, Zellbalancing und Überwachungsschaltungen. Insbesondere kann über den Anschluss B Rekuperationsleistung an zumindest einen der Energiespeicher geleitet werden, vorzugsweise an den zweiten Energiespeicher ES2 und/oder an den dritten Energiespeicher ES3. Hierbei wird die Rekuperationsleistung über den ersten Wandler CO1 geleitet.

### Bezugszeichenliste

- A: erster Anschluss
- II: zweiter Anschluss
- III: dritter Anschluss
- B: vierter Anschluss
- I: Masseanschluss
- IV: zusätzlicher Masseanschluss
- E1: erster Bordnetzzweig
- E2: zweiter Bordnetzzweig
- E3: dritter Bordnetzzweig
- ST: Starter (Teil des ersten Bordnetzzweigs)
- G1: Generator (Teil des ersten Bordnetzzweigs)
- L1: Verbraucher (Teil des ersten Bordnetzzweigs)
- ES1: erster Energiespeicher, insbes. Bleibatterie, Teil des ersten Bordnetzzweigs und diesem zuschaltbar
- ES2: zweiter Energiespeicher, insbes. Supercap (Nx), N=1 oder N>1 insbesondere als Reihenschaltung (Teil des zweiten Bordnetzzweigs)
- ES3: dritter Energiespeicher, insbes. Supercap (Nx), N=1 oder N>1 insbesondere als Reihenschaltung
- SW1: Reihenauftrennungsschaltelement (insbes. MOSFET)
- SW2: Unterstützungsschaltelement (insbes. MOSFET) (optional)
- SW3: Abkopplungsschaltelement (MOSFET oder Relais)
- CO1: Wandler
- CO2: Wandler (geringere Leistung als CO1)
- L2: Verbraucher im zweiten Bordnetzzweig
- G2: Generator im dritten Bordnetzzweig (optional)
- L3: Verbraucher, dem dritten Bordnetzzweig zuzuordnen

## Patentansprüche

1. Stabilisierungsschaltung (STS) für ein Bordnetz, wobei die Stabilisierungsschaltung aufweist:
- einen ersten Anschluss (A) eingerichtet zur Verbindung mit einem ersten Bordnetzzweig (E1);
- einen zweiten Anschluss (II) eingerichtet zur Verbindung mit einem Pol eines ersten Energiespeichers (ES1) des ersten Bordnetzzweigs;
- einem dritten Anschluss (III) eingerichtet zur Verbindung mit einem zweiten Bordnetzzweig (E2);
- einem vierten Anschluss (B) eingerichtet zur Verbindung mit einem dritten Bordnetzzweig (E3); und
- einem Masseanschluss (I; IV) eingerichtet zum Anschluss der Stabilisierungsschaltung an Masse,
- einem zweiten Energiespeicher (ES2) und einem dritten Energiespeicher (ES3);
wobei die Stabilisierungsschaltung (STS) ferner ein Reihenauftrennungsschaltelement (SW1) zwischen dem zweiten Anschluss (II) und dem Masseanschluss (I) sowie ein Abkopplungsschaltelement (SW3) aufweist, welches den ersten Anschluss (A) mit dem vierten Anschluss (B) verbindet; und wobei der zweite Energiespeicher (ES2) zwischen dem Masseanschluss (I; IV) und dem dritten Anschluss (III) angeschlossen ist und der dritte Anschluss (III) über den dritten Energiespeicher (ES3) und einen ersten Wandler (CO1) mit dem vierten Anschluss (B) verbunden ist.

2. Stabilisierungsschaltung (STS) nach Anspruch 1, die ferner ein Unterstützungsschaltelement (SW2) aufweist, welches den zweiten Anschluss (II) mit dem dritten Anschluss (III) verbindet;

3. Stabilisierungsschaltung (STS) nach Anspruch 1 oder 2, die ferner einen zweiten Wandler (CO2) aufweist, der den dritten Anschluss (III) mit dem dritten Energiespeicher (ES3) verbindet, insbesondere mit einem Pol des dritten Energiespeichers (ES3), der zum vierten Anschluss (B) oder zum ersten Wandler (CO1) hin weist.

4. Stabilisierungsschaltung (STS) nach einem der Ansprüche 1-3, wobei das Reihenauftrennungsschaltelement (SW1) eine Diode aufweist, deren Durchlassrichtung zum ersten Energiespeicher weist, und das Unterstützungsschaltelement (SW2) eine Diode aufweist, deren Durchlassrichtung zum zweiten oder zum dritten Energiespeicher (ES2, ES3) weist.

5. Stabilisierungsschaltung (STS) nach einem der vorangehenden Ansprüche, wobei der dritte Energiespeicher (ES3) ein einzelnes Speicherelement oder eine Serienschaltung von Speicherelementen aufweist, insbesondere eine Serienschaltung von Kondensatoren, insbesondere Superkondensatoren, Doppelschichtkondensatoren oder Elektrolytkondensatoren, oder eine Serienschaltung von galvanischen Zellen, insbesondere von Lithium-basierten galvanischen Zellen.

6. Stabilisierungsschaltung (STS) nach einem der vorangehenden Ansprüche, wobei der zweite Energiespeicher (ES2) ein einzelnes Speicherelement oder eine Serienschaltung von Speicherelementen aufweist, das bzw. die zwischen dem Masseanschluss (I; IV) und dem dritten Anschluss (III) angeschlossen ist, wobei das Speicherelement des zweiten Energiespeichers als ein Kondensator, insbesondere als Superkondensator, Doppelschichtkondensator oder Elektrolytkondensator ausgeführt ist, oder als galvanische Zelle, insbesondere als Lithium-basierte galvanische Zelle, ausgestaltet ist. Auch kann der zweite Energiespeicher aus zwei oder drei einzelnen Speicherelementen bestehen die parallel zueinander geschaltet werden können.

7. Stabilisierungsschaltung (STS) nach einem der vorangehenden Ansprüche, wobei die Speicherelemente des zweiten und/oder dritten Energiespeichers (ES2, ES3) jeweils einen einzelnen Kondensator aufweisen oder eine Parallelschaltung von mehreren Kondensatoren aufweisen, wobei insbesondere der zweite und/oder der dritte Energiespeicher mehrere Reihenschaltungen von parallel geschalteten Kondensatoren aufweist.

8. Stabilisierungsschaltung (STS) nach einem der vorangehenden Ansprüche, wobei die Schaltelemente als Leistungshalbleiterschalter, insbesondere als MOSFET, oder als elektromechanische Schalter, insbesondere als Relais, ausgestaltet sind.

9. Stabilisierungsschaltung (STS) nach einem der vorangehenden Ansprüche, die ferner eine Ansteuerschaltung aufweist, welche mit zumindest einem der Schaltelemente (SW1, SW2, SW3) und/oder zumindest einer der Wandler (CO1, CO2) ansteuernd verbunden ist, wobei die Ansteuerschaltung eingerichtet ist, die daran angeschlossenen Elemente in zumindest einen der folgenden Zustände zu versetzen:
- ein Rekuperationszustand, in dem das Reihenauftrennungsschaltelement (SW1) geöffnet ist und das Abkopplungsschaltelement (SW3) geschlossen ist, um Rekuperationsleistung, die am ersten Anschluss (A) oder am vierten Anschluss (B) anliegt, an den zweiten und den dritten Energiespeicher (ES2, ES3), insbesondere über den ersten Wandler (CO1), zu übermitteln;
- ein erster Startzustand, in dem das Abkopplungsschaltelement (SW3) geöffnet ist und das Reihenauftrennungsschaltelement (SW1) geschlossen ist, um Leistung von dem ersten Energiespeicher ES1 an den ersten Anschluss (A) zu übermitteln, um den daran anschließbaren ersten Bordnetzzweig (E1) ohne Beeinträchtigung der anderen Bordnetzzweige (E2, E3) bei einem Startvorgang zu versorgen;
- ein zweiter Startzustand, in dem das Abkopplungsschaltelement (SW3) geschlossen und das Reihenauftrennungsschaltelement (SW1) offen oder geschlossen ist, um Leistung von dem zweiten und/oder dritten Energiespeicher (ES2, ES3) zur Unterstützung eines Startvorgangs an den ersten Anschluss (A) zu übermitteln.

## Claims

1. Stabilization circuit (STS) for a vehicle electrical system, wherein the stabilization circuit comprises:
- a first connection (A) adapted for connection to a first electrical system branch (E1);
- a second connection (II) adapted for connection to a pole of a first energy store (ES1) of the first electrical system branch;
- a third connection (III) adapted for connection to a second electrical system branch (E2);
- a fourth connection (B) adapted for connection to a third electrical system branch (E3); and
- a grounding connection (I; IV) adapted for connection of the stabilization circuit to ground,
- a second energy store (ES2) and a third energy store (ES3) ;
wherein the stabilization circuit (STS) further comprises a serial disconnection switch element (SW1) between the second connection (II) and the grounding connection (I) as well as a decoupling switch element (SW3), which connects the first connection (A) to the fourth connection (B); and wherein the second energy store (ES2) is connected between the grounding connection (I; IV) and the third connection (III) and the third connection (III) is connected via the third energy store (ES3) and a first converter (CO1) to the fourth connection (B).

2. Stabilization circuit (STS) according to Claim 1, which further comprises a supporting switch element (SW2), which connects the second connection (II) to the third connection (III) .

3. Stabilization circuit (STS) according to Claim 1 or 2, which further comprises a second converter (CO2), which connects the third connection (III) to the third energy store (ES3), in particular to a pole of the third energy store (ES3), which points toward the fourth connection (B) or toward the first converter (CO1).

4. Stabilization circuit (STS) according to one of Claims 1-3, wherein the serial disconnection switch element (SW1) comprises a diode, whose direction of conduction points toward the first energy store and the supporting switch element (SW2) comprises a diode, whose direction of conduction points toward the second or toward the third energy store (ES2, ES3).

5. Stabilization circuit (STS) according to one of the preceding claims, wherein the third energy store (ES3) comprises a single storage element or a series circuit of storage elements, in particular a series circuit of capacitors, in particular supercapacitors, double-layer capacitors, or electrolyte capacitors, or a series circuit of galvanic cells, in particular of lithium-based galvanic cells.

6. Stabilization circuit (STS) according to one of the preceding claims, wherein the second energy store (ES2) comprises a single storage element or a series circuit of storage elements, which is or are connected between the grounding connection (I; IV) and the third connection (III), wherein the storage element of the second energy store is designed as a capacitor, in particular as a supercapacitor, double-layer capacitor, or electrolyte capacitor, or is configured as a galvanic cell, in particular as a lithium-based galvanic cell. The second energy store can also consist of two or three individual storage elements which can be connected parallel to one another.

7. Stabilization circuit (STS) according to one of the preceding claims, wherein the storage elements of the second and/or third energy store (ES2, ES3) each comprise an individual capacitor or a parallel circuit of a plurality of capacitors, wherein in particular the second and/or the third energy store comprises a plurality of series circuits of parallel-connected capacitors.

8. Stabilization circuit (STS) according to one of the preceding claims, wherein the switch elements are configured as power semiconductor switches, in particular as MOSFETs or as electromechanical switches, in particular as relays.

9. Stabilization circuit (STS) according to one of the preceding claims, which further comprises a drive circuit, which is connected to at least one of the switch elements (SW1, SW2, SW3) and/or at least one of the converters (CO1, CO2) in a driving manner, wherein the drive circuit is adapted to set the elements connected thereto into at least one of the following states:
- a regeneration state in which the serial disconnection switch element (SW1) is open and the decoupling switch element (SW3) is closed in order to transmit regenerative power, which is present at the first connection (A) or at the fourth connection (B), to the second and the third energy stores (ES2, ES3), in particular via the first converter (CO1);
- a first start state in which the decoupling switch element (SW3) is open and the serial disconnection switch element (SW1) is closed in order to transmit power from the first energy store ES1 to the first connection (A) in order to supply the first electrical system branch (E1), which can be connected thereto, without adversely affecting the other electrical system branches (E2, E3) during a start process;
- a second start state in which the decoupling switch element (SW3) is closed and the serial disconnection switch element (SW1) is open or closed in order to transmit power from the second and/or third energy store (ES2, ES3) to the first connection (A) to support a start process.

## Revendications

1. Circuit stabilisateur (STS) destiné à un réseau embarqué, dans lequel le circuit stabilisateur comporte :
- une première borne (A) conçue pour la connexion à une première branche de réseau embarqué (E1) ;
- une deuxième borne (II) conçue pour la connexion à un pôle d'un premier accumulateur d'énergie (ES1) du premier réseau embarqué ;
- une troisième borne (III) conçue pour la connexion à une deuxième branche de réseau embarqué (E2) ;
- une quatrième borne (B) conçue pour la connexion à une troisième branche de réseau de bord (E3) ; et
- une borne de masse (I ; IV) conçue pour la connexion du circuit stabilisateur à la masse,
- un deuxième accumulateur d'énergie (ES2) et un troisième accumulateur d'énergie (ES3) ;
dans lequel le circuit stabilisateur (STS) comporte en outre un élément interrupteur en série (SW1) entre la deuxième borne (II) et la borne de masse (I) ainsi qu'un élément de découplage (SW3) qui relie la première borne (A) à la quatrième borne (B) ; et
dans lequel le deuxième accumulateur d'énergie (ES2) est connecté entre la borne de masse (I ; IV) et la troisième borne (III) et la troisième borne (III) est reliée à la quatrième borne (B) par l'intermédiaire du troisième accumulateur d'énergie (ES3) et d'un premier convertisseur (CO1).

2. Circuit stabilisateur (STS) selon la revendication 1, comportant en outre un élément de commutation auxiliaire (SW2) qui relie la deuxième borne (II) à la troisième borne (III).

3. Circuit stabilisateur (STS) selon la revendication 1 ou 2, comportant en outre un deuxième convertisseur (CO2) qui relie la troisième borne (III) au troisième accumulateur d'énergie (ES3), notamment à un pôle du troisième accumulateur d'énergie (ES3) qui correspond à la quatrième borne (B) ou au premier convertisseur (CO1).

4. Circuit stabilisateur (STS) selon l'une des revendications 1 à 3, dans lequel l'élément interrupteur en série (SW1) comporte une diode qui est passante vers le premier accumulateur d'énergie et dans lequel l'élément de commutation auxiliaire (SW2) comporte une diode qui est passante vers le deuxième ou le troisième accumulateur d'énergie (ES2, ES3).

5. Circuit stabilisateur (STS) selon l'une des revendications précédentes, dans lequel le troisième accumulateur d'énergie (ES3) comporte un élément accumulateur individuel ou un circuit série d'éléments accumulateurs, notamment un circuit série de condensateurs, notamment des super-condensateurs, des condensateurs double couche, ou des condensateurs électrolytiques, ou un circuit série de cellules galvaniques, notamment de cellules galvaniques à base de lithium.

6. Circuit stabilisateur (STS) selon l'une des revendications précédentes, dans lequel le deuxième accumulateur d'énergie (ES2) comporte un élément accumulateur individuel ou un circuit série d'éléments accumulateurs qui est/sont connecté (s) entre la borne de masse (I ; IV) et la troisième borne (III), dans lequel l'élément accumulateur du deuxième accumulateur d'énergie est réalisé sous la forme d'un condensateur, notamment sous la forme d'un super-condensateur, d'un condensateur double couche ou d'un condensateur électrolytique, ou est également configuré sous la forme de cellules galvaniques, notamment sous la forme de cellules galvaniques à base de lithium, le deuxième accumulateur d'énergie pouvant également être constitué de deux ou trois éléments accumulateurs individuels qui peuvent être connectés en parallèle les uns aux autres.

7. Circuit stabilisateur (STS) selon l'une des revendications précédentes, dans lequel les éléments accumulateurs du deuxième et/ou du troisième accumulateur d'énergie (ES2, ES3) comportent respectivement un condensateur individuel ou comporte un circuit parallèle de plusieurs condensateurs, dans lequel le deuxième et/ou le troisième accumulateur d'énergie comporte/comportent notamment des circuits série de condensateurs connectés en parallèle.

8. Circuit stabilisateur (STS) selon l'une des revendications précédentes, dans lequel les éléments de commutation sont réalisés sous la forme de commutateurs à semiconducteur de puissance, notamment sous la forme de transistors MOSFET, ou sous la forme de commutateurs électromécaniques, notamment sous la forme de relais.

9. Circuit stabilisateur (STS) selon l'une des revendications précédentes, comportant en outre un circuit de commande qui est relié à au moins l'un des éléments de commutation (SW1, SW2, SW3) et/ou à au moins l'un des convertisseurs (CO1, CO2) de manière à les commander, dans lequel le circuit de commande est conçu pour faire passer les éléments qui lui sont connectés dans au moins l'un des états suivants :
- un état de récupération dans lequel l'élément interrupteur en série (SW1) est ouvert et l'élément de découplage (SW3) est fermé afin de transmettre une puissance de récupération qui est présente sur la première borne (A) ou sur la quatrième borne (B) aux deuxième et troisième accumulateurs d'énergie (ES2, ES3), notamment par l'intermédiaire du premier convertisseur (CO1) ;
- un premier état de démarrage dans lequel l'élément de découplage (SW3) est ouvert et l'élément interrupteur en série (SW1) est fermé afin de transmettre une puissance du premier accumulateur d'énergie (ES1) à la première borne (A) afin d'alimenter la première branche de réseau de bord (E1) qui peut lui être connectée sans affecter les autres branches de réseau embarqué (E2, E3) lors d'un processus de démarrage ;
- un deuxième état de démarrage dans lequel l'élément de découplage (SW3) est fermé et l'élément interrupteur en série (SW3) est ouvert ou fermé afin de transmettre une puissance du deuxième et/ou du troisième accumulateur d'énergie (ES2, ES3) à la première borne (A) pour l'assistance d'un processus de démarrage.
